(19) Europäisches Patentamt / European Patent Office / Office européen des brevets

(11) **EP 4 122 980 A1**

(12) **EUROPEAN PATENT APPLICATION**
published in accordance with Art. 153(4) EPC

(43) Date of publication:
**25.01.2023 Bulletin 2023/04**

(21) Application number: **21771905.3**

(22) Date of filing: **15.02.2021**

(51) International Patent Classification (IPC):
*C08J 9/30* *(2006.01)*

(52) Cooperative Patent Classification (CPC):
**C08J 9/30**

(86) International application number:
**PCT/JP2021/005503**

(87) International publication number:
**WO 2021/186982 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.03.2020 JP 2020046086**

(71) Applicant: **Japan Tobacco Inc.**
**Tokyo 105-6927 (JP)**

(72) Inventors:
• **NAGAI, Riho**
**Tokyo 130-8603 (JP)**
• **YOSHIDA, Shinya**
**Tokyo 130-8603 (JP)**

(74) Representative: **Hoffmann Eitle**
**Patent- und Rechtsanwälte PartmbB**
**Arabellastraße 30**
**81925 München (DE)**

(54) **POROUS BODY PRODUCTION METHOD AND POROUS BODY**

(57)     This porous body production method includes: supplying an inactive gas to a polysaccharide solution and preparing a liquid to which the inactive gas has been supplied; reducing pressure on the liquid to which the inactive gas has been supplied and forming a foam; and drying the foam by means of reduced-pressure drying, and forming a porous body.

F I G. 5

EP 4 122 980 A1

**Description**

FIELD

The invention relates generally to a method for producing a porous body and also to a porous body.

BACKGROUND

Foams containing polysaccharides such as agar as a main component are known. For example, Patent Literature 1 relates to a foam used as a filter for a smoking article, and discloses forming a foam by extruding a mixture of a biopolymer such as a polysaccharide and a foaming agent Alternatively, Patent Literature 1 discloses forming a foam by freeze-drying a solution of a biopolymer such as a polysaccharide. Patent Literature 2 relates to a foam that can be used as a raw material for medical materials, cell culture immobilization media, packaging materials, and the like, and discloses that an aqueous solution containing a water-soluble polymer such as agar, a foaming agent, and a plasticizer is foamed and then dried to form a foam.

CITATION LIST

PATENT LITERATURE

[Patent Literature 1] WO 2011/117752
[Patent Literature 2] Jpn. Pat. Appln. KOKAI Publication No. 2007-91954

SUMMARY

TECHNICAL PROBLEM

The foam of Patent Literature 1 is considered to have flat pores from a production method thereof and results of Example 1 described later, and the foam of Patent Literature 2 is found to have flat pores from a cross-sectional photograph thereof. An object of the present invention is to provide a porous body having substantially spherical pores uniformly, that is, a porous body having isotropic properties.

SOLUTION TO PROBLEM

According to one aspect, there is provided a method for producing a porous body, the method comprising:

supplying an inert gas to a solution of a polysaccharide to prepare an inert gas-supplied liquid;
pressure-reducing the inert gas-supplied liquid to form a foam; and
drying the foam by reduced-pressure drying to form a porous body.

According to another aspect, there is provided a porous body obtainable by the above-mentioned method.

ADVANTAGEOUS EFFECTS OF INVENTION

According to the present invention, a porous body having isotropic properties can be provided.

BRIEF DESCRIPTION OF THE DRAWINGS

FIG. 1 is a perspective view showing an example of a flavor inhalation system.
FIG. 2 is a view showing an internal structure of a flavor inhalation article.
FIG. 3 is a view showing an internal structure of an aerosol generation device.
FIG. 4 is a diagram showing an example of a flavor inhalation article.
FIG. 5 is an SEM image showing an xy cross section of Sample 1.
FIG. 6 is an SEM image showing a yz cross section of Sample 1.

FIG. 7 is an SEM image showing a zx cross section of Sample 1.

FIG. 8 is an SEM image showing an xy cross section of Sample 2.

FIG. 9 is an SEM image showing a yz cross section of Sample 2.

FIG. 10 is an SEM image showing a zx cross section of Sample 2.

FIG. 11 is an SEM image showing an xy cross section of Sample 3.

FIG. 12 is an SEM image showing a yz cross section of Sample 3.

FIG. 13 is an SEM image showing a zx cross section of Sample 3.

FIG. 14 is an SEM image showing an xy cross section of Sample 4.

FIG. 15 is an SEM image showing a yz cross section of Sample 4.

FIG. 16 is a graph showing the relationship between a water content and a recovery rate of a water-containing porous body.

FIG. 17 is a graph showing the relationship between a water content and a recovery rate of a water-containing porous body.

FIG. 18 is a graph showing the relationship between a viscosity of an aqueous agar solution and an apparent density of a foam.

FIG. 19 is a graph showing the relationship between a $CO_2$ partial pressure and an apparent density of a foam.

FIG. 20 is a graph showing the relationship between a temperature of an aqueous agar solution after pressure release and an apparent density of a foam.

## DETAILED DESCRIPTION

Hereinafter, the present invention will be described in detail, and the following description is intended to describe the invention and is not intended to limit the invention.

<1. Method for Producing Porous Body>

A method for producing a porous body includes:

supplying an inert gas to a solution of a polysaccharide to prepare an inert gas-supplied liquid;
pressure-reducing the inert gas-supplied liquid to form a foam; and
drying the foam by reduced-pressure drying to form a porous body.

Hereinafter, the steps will be described in the order of "Preparation of Solution of Polysaccharide", "Supply of Inert Gas to Solution of Polysaccharide", "Pressure-reduction of Inert Gas-supplied Liquid", and "Drying of Foam".

(Preparation of Solution of Polysaccharide)

The solution of a polysaccharide is preferably a solution of a "polysaccharide having temperature-responsive sol-gel transition characteristics", and more preferably an aqueous solution of a "polysaccharide having temperature-responsive sol-gel transition characteristics". The "polysaccharide having temperature-responsive sol-gel transition characteristics" refers to a polysaccharide having characteristics of being dissolved in water when immersed in water and heated, and then being gelled when cooled. Thus, the "polysaccharide having temperature-responsive sol-gel transition characteristics" can be preferably used in the method of the present invention because it can transition between a sol state and a gel state depending on the temperature.

Examples of the "polysaccharide having temperature-responsive sol-gel transition characteristics" include agar, gellan gum, carrageenan, xanthan gum, locust bean gum, and curdlan. Therefore, agar, gellan gum, carrageenan, xanthan gum, locust bean gum, curdlan, or any combination thereof may be used as the polysaccharide. In particular, agar and gellan gum can be preferably used in the method of the present invention because their dissolution temperature and gelation temperature are in a temperature range that is easy to control.

In the case of an aqueous solution of a "polysaccharide having temperature-responsive sol-gel transition characteristics", the solution of the polysaccharide can be prepared by immersing the polysaccharide in water and heating it to a temperature equal to or higher than the dissolution temperature of the polysaccharide.

The solution of the polysaccharide can have a viscosity of, for example, 0.01 to 50 [Pa·s], preferably 0.8 to 20 [Pa·s] under conditions of a temperature of 45 °C and atmospheric pressure. A solution of the polysaccharide having the aforementioned viscosity is advantageous in that the inert gas is easily retained in the solution of the polysaccharide in the subsequent step of supplying the inert gas. In the case where the solution of the polysaccharide is an agar aqueous solution, the agar can be contained in an amount of, for example, 10 to 45 g, and preferably 30 to 40 g, with respect to water 750 g (see Example 3 described later).

(Supply of Inert Gas to Solution of Polysaccharide)

In this step, an inert gas is supplied to the solution of the polysaccharide to prepare an inert-gas supplied liquid. The inert gas is a gas that is to be supplied to the solution of the polysaccharide and forms pores of a porous body. Examples of the inert gas include $CO_2$, $N_2O$, air, and $N_2$. The inert gas is preferably $CO_2$ or $N_2O$.

The inert gas can be supplied by any method as long as a sufficient amount of the inert gas can be contained in the solution of the polysaccharide. For example, the supplying the inert gas can be performed by bubbling the inert gas into the solution of the polysaccharide and/or shaking the solution of the polysaccharide in the presence of the inert gas. In this case, either one or both of bubbling and shaking may be performed. Alternatively, the inert gas may be supplied by stirring the inert gas and the solution of the polysaccharide.

Preferably, the inert gas can be supplied by bubbling the inert gas into the solution of the polysaccharide and then shaking the solution of the polysaccharide. Thereby, a larger amount of the inert gas can be supplied to the solution of the polysaccharide, and then the mixing of the solution of the polysaccharide and the inert gas can be promoted to form bubbles.

Alternatively, the supply of the inert gas can be performed by supplying the inert gas to the solution of the polysaccharide contained in a sealed container while pressurizing the inert gas. This allows a greater amount of the inert gas to be supplied to and retained in the solution of the polysaccharide. Therefore, more preferably, the supply of the inert gas can be performed by bubbling the inert gas into the solution of the polysaccharide contained in a sealed container while pressurizing the inert gas, and then shaking the solution of the polysaccharide.

In the liquid obtained by supplying the inert gas, the inert gas may be dispersed as bubbles in the solution of the polysaccharide (hereinafter, also referred to as sol), may be dissolved in the sol, or may be partially dispersed as bubbles in the sol and the rest dissolved in the sol. In the case where the inert gas is dissolved in the sol, the size of the pores in the finally obtained porous body may be smaller than that in the case where the inert gas is dispersed as bubbles in the sol.

The partial pressure of the inert gas at the time of supplying the inert gas is not particularly limited as long as the inert gas can be supplied to the solution of the polysaccharide (that is, as long as the partial pressure is larger than 0), but is preferably large to some extent from the viewpoint of supply efficiency. The upper limit of the partial pressure of the inert gas is limited by the pressure resistance performance of the container, but is not particularly limited. The inert gas can be supplied at a partial pressure higher than 0 kPa, preferably higher than 0 kPa and equal to or lower than 4000 kPa, more preferably equal to or higher than 800 kPa, and still more preferably 800 to 4000 kPa (see Example 3 described later).

Immediately before the inert gas is supplied, the solution of the polysaccharide is preferably cooled to a temperature at which the solution is not gelled even after the inert gas supply step. Specifically, the solution of the polysaccharide preferably has a temperature higher by 15 to 55 °C than the gelation temperature of the solution of the polysaccharide immediately before the inert gas is supplied (see Example 3 described later). The solution of the polysaccharide more preferably has a temperature higher by 25 to 45 °C than the gelation temperature of the solution of the polysaccharide immediately before the inert gas is supplied (see Example 3 described later).

When the solution of the polysaccharide is cooled to the aforementioned temperature immediately before the inert gas is supplied, the solubility of the inert gas can be increased, and the viscosity of the solution of the polysaccharide can be increased. This allows a greater amount of inert gas to be dissolved and retained in the solution of polysaccharide. In addition, when the solution of the polysaccharide is cooled to the above-described temperature immediately before the inert gas is supplied, the foam can be rapidly cooled to be gelled in the subsequent step (that is, after the inert gas-supplied liquid is pressure-reduced), and thus the inert gas can be prevented from escaping from the foam.

In the specification of the present application, "gelation temperature" can be defined as follows: A 4.0% by mass polysaccharide solution (sol) is cooled at a temperature decrease rate of 5 °C/min to be gelled, and the storage elastic modulus G' and the loss elastic modulus G" with respect to the change in temperature are plotted. In the obtained graph, the temperature at the point where the values of the storage elastic modulus G' and the loss elastic modulus G" intersect is referred to as a "gelation temperature". For example, in the case of a solution of agar, the gelation temperature is about 35 °C.

(Pressure-reduction of Inert Gas-supplied Liquid)

In this step, the inert-gas supplied liquid is pressure-reduced to form a foam. In this step, the pressure of the surrounding environment of the inert gas-supplied liquid is relatively lowered, and thereby, innumerable bubbles can be generated in the inert gas-supplied liquid.

As described above, before the pressure-reduction, the inert gas may be dispersed as bubbles in the solution of the polysaccharide (hereinafter, also referred to as sol), may be dissolved in the sol, or may be partially dispersed as bubbles in the sol and the rest dissolved in the sol. The inert gas present as bubbles in the sol can generate larger bubbles, and the inert gas dissolved in the sol can generate bubbles by foaming through the pressure-reduction.

The foam obtained here has a shape similar to that of a foam-state hairdressing product (hair mousse). The foam has a clearly increased volume compared to the liquid before the pressure-reduction.

The pressure difference between before and after the pressure-reduction is not particularly limited as long as bubbles can be generated in the inert gas-supplied liquid (that is, as long as the pressure difference is larger than 0). However, the pressure difference is preferably large to some extent from the viewpoint of foaming efficiency. The upper limit of the pressure difference is limited by the pressure resistance of the container, but is not particularly limited. The pressure-reducing is, for example, pressure-reducing that causes a pressure difference to be greater than 0 kPa, preferably greater than 0 kPa and equal to or less than 4000 kPa, more preferably equal to or greater than 800 kPa, and even more preferably 800 to 4000 kPa, between before and after the pressure-reduction. The pressure-reduction that generates such a pressure difference can efficiently generate bubbles in the inert gas-supplied liquid.

As long as the pressure of the surrounding environment of the inert gas-supplied liquid can be relatively reduced, the pressure of the surrounding environment of the liquid before the pressure-reduction and the pressure of the surrounding environment of the liquid after the pressure-reduction are not particularly limited. According to one example, the pressure of the surrounding environment of the liquid before the pressure-reduction can be higher than the atmospheric pressure (i.e., 101.325 kPa), for example, 1000 to 1300 kPa, and the pressure of the surrounding environment of the liquid after the pressure-reduction can be the atmospheric pressure. This example can be implemented by supplying an inert gas to a solution of a polysaccharide contained in a sealed container while pressurizing the inert gas, and then pressure-reducing the solution by opening the sealed container.

Immediately before the pressure-reduction, the inert gas-supplied liquid is preferably cooled to a temperature at which the polysaccharide solution is not gelled. Specifically, the inert gas-supplied liquid preferably has a temperature higher by 5 to 25 °C than the gelation temperature of the polysaccharide solution immediately before the pressure-reduction (see Example 3 described later). It is more preferable that the inert gas-supplied liquid have a temperature higher by 9 to 15 °C than the gelation temperature of the polysaccharide solution immediately before the pressure-reduction (see Example 3 described later).

In this way, when the inert gas-supplied liquid is cooled to the aforementioned temperature immediately before the pressure-reduction, the foam can be rapidly cooled and gelled after the pressure-reduction, thereby preventing the inert gas from escaping from the foam. That is, as the time required for gelation becomes shorter, the possibility that the inert gas will escape from the foam during that time becomes lower, and the pores of the porous body can be reliably formed.

If the temperature of the liquid immediately before the pressure-reduction cannot be measured before the pressure-reduction, the temperature is measured immediately after the pressure-reduction and regarded as the temperature of the liquid immediately before the pressure-reduction.

(Drying of Foam)

After the foam is formed, the obtained foam is dried by reduced-pressure drying to form a porous body. The reduced-pressure drying can be performed under conditions of, for example, 10 kPa or less, preferably 1 kPa or less, and more preferably 0 to 0. 7 kPa. The reduced-pressure drying means drying including a "drying step under reduced-pressure conditions". For example, the reduced-pressure drying may be drying consisting of a freezing step and a subsequent drying step under reduced-pressure conditions (that is, freeze-drying), or may be drying consisting only of a drying step under reduced-pressure conditions. The reduced-pressure drying is preferably freeze-drying.

Through the reduced-pressure drying of the foam, the foam is gelled and the liquid (for example, water) contained in the foam is removed. As a result, the bubbles in the foam become pores of the porous body, and the polysaccharide contained in the foam becomes walls (partition walls) separating the pores of the porous body. Note that heat drying such as hot air drying is not preferable, because gelation of the foam is prevented or the gelled foam is redissolved. Besides the reduced-pressure drying, any drying method can be adopted as long as it does not cause significant shrinkage of the foam; for example, supercritical drying can be adopted.

Between the pressure-reducing for forming the foam and the drying, the foam may be cooled to a temperature at or below the gelation temperature to cause the foam to be gelled. This cooling can be performed by allowing the foam to stand at room temperature. Specifically, the foam can be gelled by allowing the foam to stand under a condition of 15 to 25 °C between the pressure-reducing for forming the foam and the drying. When the foam is gelled by relatively slow cooling as described above, it is possible to make the foam and the porous body less likely to change or shrink.

When the foam is gelled between the pressure-reducing for forming the foam and the drying, the obtained gelled foam is herein referred to as a "gel-state foam" in order to distinguish it from the mousse-state foam obtained after the pressure-reduction.

In the aforementioned method for producing a porous body, since pores of the porous body can be formed by foaming of an inert gas, only an inert gas is sufficient as a foaming agent, and it is not necessary to use an additional foaming agent such as a surfactant. That is, in a specific embodiment of the method described above, the inert gas-supplied liquid does not contain a foaming agent other than the inert gas. In this specific embodiment, the finally produced porous body does not contain a foaming agent other than an inert gas. Therefore, when the porous body is used for either a flavor inhalation article including a tobacco flavor source or a food product, the porous body is advantageous in that safety is assured even when put into the mouth of a consumer and that an undesirable flavor is not generated by combustion or heating.

(Addition of Water)

A water-containing porous body can be formed by adding water to the porous body produced according to the above method (hereinafter, also referred to as a dried porous body).

Water can be added in any manner. For example, water may be added by adding a predetermined amount of water dropwise to the dried porous body, or by immersing the dried porous body in water and then removing excess water from the porous body.

The added water is absorbed by the walls (partition walls) separating the pores of the dried porous body. A dried porous body can absorb water of several tens of times its mass.

Water can be added in an amount of, for example, less than 0.5 parts by mass, and preferably 0.3 parts by mass or less, with respect to 1 part by mass of the porous body. A porous body having such a water content and a porous body to which water is not added has low elasticity and can provide a crispy texture when broken. Alternatively, water can be added in an amount of, for example, 0.5 to 50 parts by mass, and preferably 1.0 to 40 parts by mass, with respect to 1 part by mass of the porous body. A porous body having such a water content has high elasticity and can provide a fluffy texture when pressed with a finger.

The water content of the water-containing porous body can be obtained as follows: That is, the water content of the water-containing porous body can be obtained by cutting a part (for example, a cube of 1 cm$^3$) from the water-containing porous body, drying by heating the obtained sample to obtain an amount of water loss, and dividing the amount of water loss by the weight of the sample after drying.

$$\text{Water content (g/g-dry)} = \text{weight change before and after drying (amount of water loss) / sample weight after drying.}$$

The "porous body having a crispy texture" described above can contain a water content of, for example, 0 to less than 0.5 g/g, and preferably 0 to 0.3 g/g (see Example 2 described later). The "porous body having a fluffy texture" described above can contain a water content of, for example, 0.5 g/g or more, preferably 0.5 to 50 g/g, and more preferably 1.0 to 40 g/g (see Example 2 described later).

Thus, the hardness of the porous body changes depending on the water content thereof. In other words, it is possible to prepare porous bodies having various hardnesses by controlling the water contents of the porous bodies.

When the water-containing porous body is dried, it can be returned to the structure of the porous body before the addition of water (dried porous body).

(Addition of Additional Component)

The method for producing a porous body described above may be implemented in such a way that the porous body finally produced contains an additional component besides the polysaccharide.

The additional component can be appropriately selected according to the use of the porous body. The additional component may be a substance that is insoluble in the solution of the polysaccharide (i.e., a dispersoid) or a substance that is soluble in the solution of the polysaccharide (i.e., a solute). The additional component is incorporated into the walls (partition walls) separating the pores of the porous body. Therefore, when the additional component is a dispersoid, the dispersoid preferably has a size smaller than the pore size of the porous body. For example, the dispersoid preferably has a maximum length of 500 μm or less, generally 10 to 500 μm. When the additional component is a dispersoid, the dispersoid is preferably in the form of particles, and more preferably particles having an average particle size of, for example, 500 μm or less, generally 10 to 500 μm.

The additional component may be added to the solution of the polysaccharide before the inert gas is supplied, or may be added to the inert gas-supplied liquid before the pressure-reducing for forming the foam. In other words, if the additional component is contained in the inert gas-supplied liquid at a time point before the pressure-reducing for forming the foam, the porous body to be finally produced can contain the additional component.

Thus, in the particular embodiment of the method described above, the inert gas-supplied liquid further contains a dispersoid in addition to the polysaccharide. The dispersoid is not dissolved in the inert gas-supplied liquid, and exists as a solid in the liquid. The dispersoid can be contained in the porous body in an amount of, for example, 0 to 570% by mass, preferably 30 to 570% by mass, with respect to the polysaccharide. The dispersoid is, for example, a tobacco material or a food material. As described above, the tobacco material and the food material are preferably in the form of particles, and are more preferably particles having an average particle size of, for example, 500 μm or less, generally 10 to 500 μm. Examples of the tobacco material include cut tobacco, fine tobacco powder (a pulverized product of the tobacco material such as cut tobacco), and tobacco granules (granules obtained by granulating the tobacco material such as cut tobacco). Any food material can be used as long as it is a solid edible material or a solid food additive. Examples of the food material include, but are not limited to, a vegetable, a fruit, wheat flour, almond powder, a seasoning, and a food additive.

Alternatively, in the particular embodiment of the method described above, the inert gas-supplied liquid further contains, in addition to the polysaccharide, a solute other than the polysaccharide. The solute is dissolved in the inert gas-supplied liquid. The solute can be contained in the porous body in an amount of, for example, 0 to 570% by mass, preferably 0 to 50% by mass, with respect to the polysaccharide. The solute is, for example, a tobacco flavor component or a food component. The tobacco flavor component refers to a component that contributes to a tobacco flavor in a flavor inhalation article including a tobacco flavor source. The tobacco flavor component may be, for example, a flavor component derived from a tobacco material (e.g., a tobacco extraction liquid or a tobacco extraction component), or may be a flavor component not derived from a tobacco material (e.g., menthol, mint, vanilla, etc.). The food component refers to any component contained in a food product. As the food component, any component can be used as long as it is a food component soluble in the liquid in which the inert gas is dissolved. Examples of the food component include, but are not limited to, sugar, salt, butter, a food flavorant, a coloring agent, a fruit juice, fat and oil, oil, a beverage, a seasoning, and a food additive.

<2. Porous Body>

The above method includes three steps: (1) supplying an inert gas to a solution of a polysaccharide, (2) pressure-reducing the inert gas-supplied liquid, and (3) drying a foam. Through steps (1) and (2), innumerable spherical bubbles can be generated in the inert gas-supplied liquid, and through step (3), a porous body (dried porous body) in which the bubbles of the foam are maintained as pores can be formed.

When water is added to the dried porous body, the added water is absorbed by the walls (partition walls) separating the pores of the dried porous body. Therefore, a water-containing porous body in which the bubbles of the foam are maintained as pores can be formed.

When the dried porous body and the water-containing porous body are produced so as to contain an additional component, the additional component is incorporated into the walls (partition walls) separating the pores of the porous body. Therefore, a porous body in which the bubbles of the foam are maintained as pores can be formed.

The porous body obtained by the method described above maintains innumerable spherical bubbles of the foam as pores. For this reason, when a horizontal cross section and vertical cross sections of the porous body obtained by the above-described method are observed with a microscope, the observed pores have a substantially circular shape and do not have an obviously distorted shape (for example, an obviously flat shape) in both the horizontal cross section and the vertical cross sections. In addition, when the horizontal cross section and the vertical cross sections of the porous body are observed with a microscope, the observed pores are uniformly distributed in both the horizontal cross section and the vertical cross sections. Therefore, the method described above can provide a porous body having substantially spherical pores uniformly, that is, a porous body having isotropic properties.

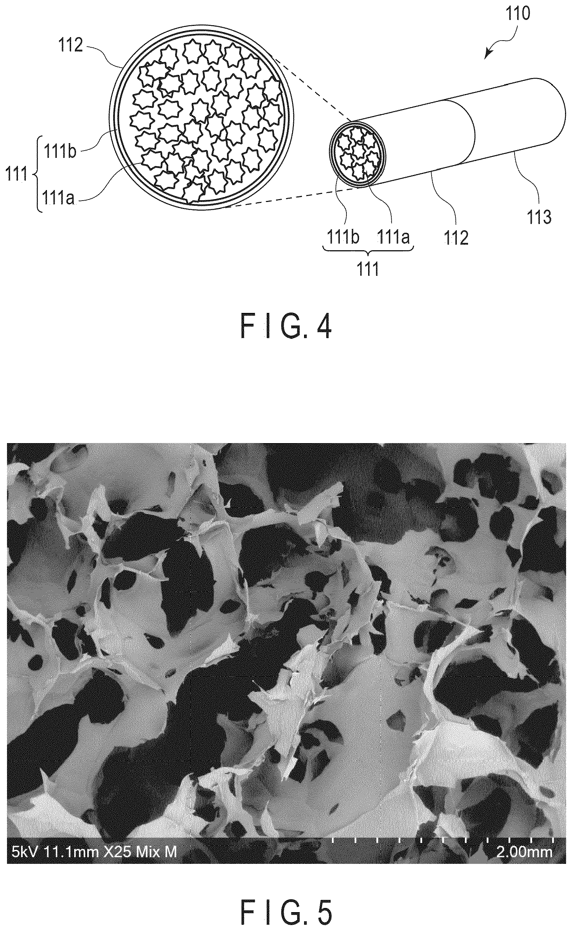

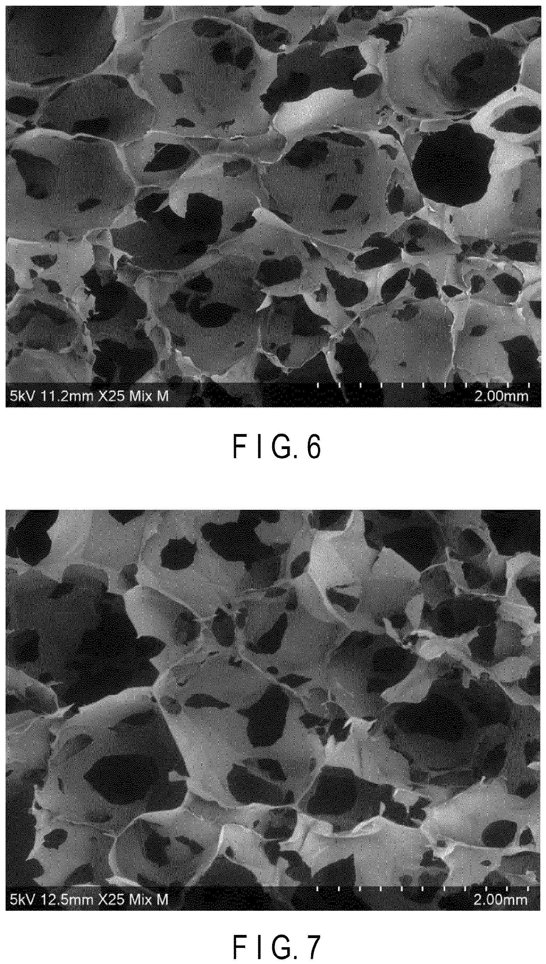

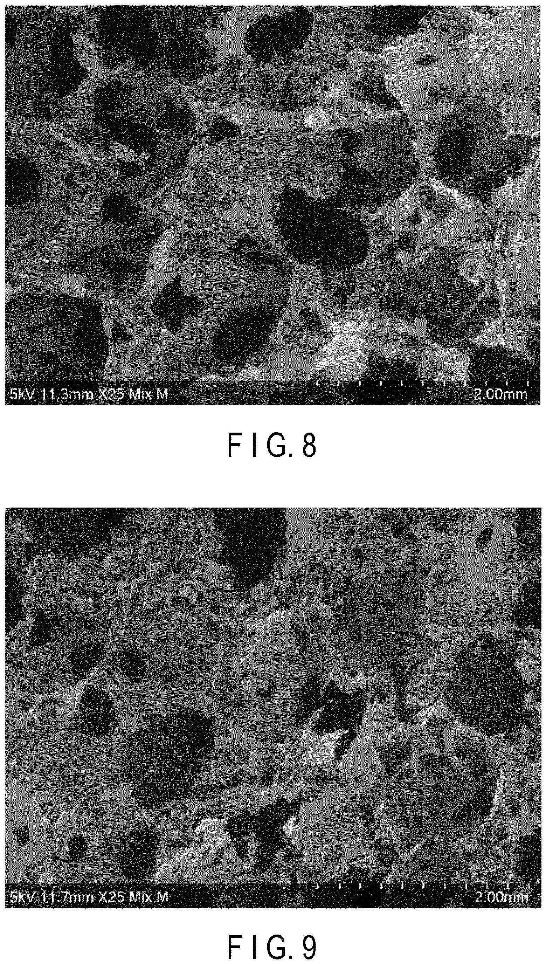

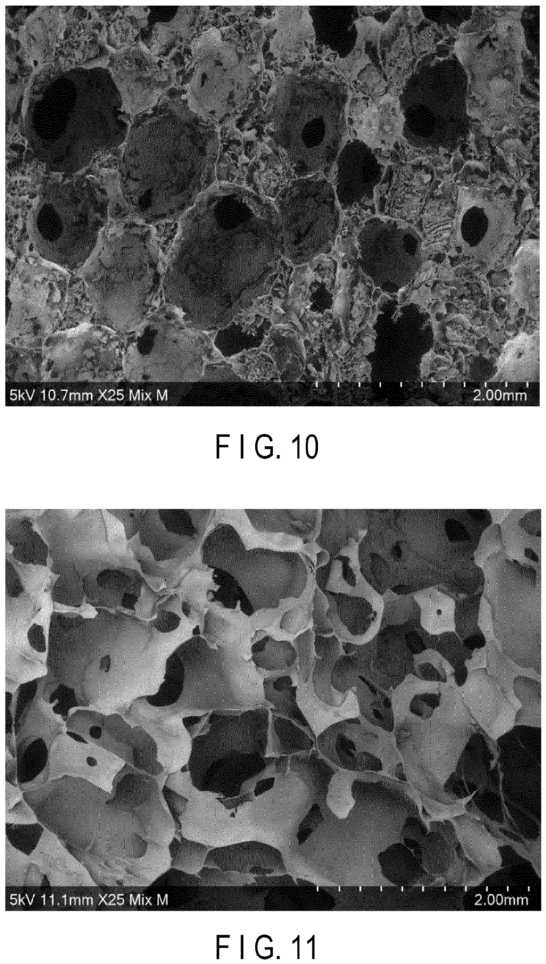

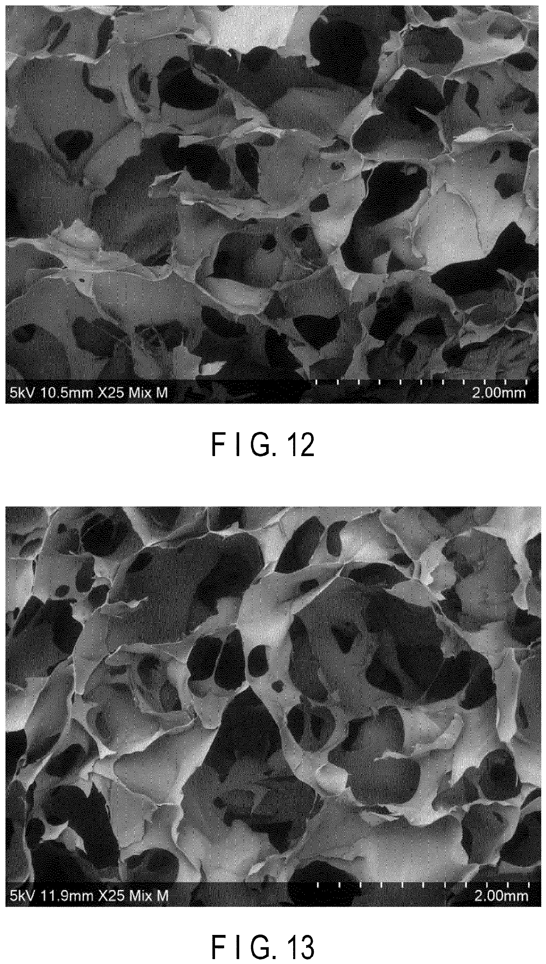

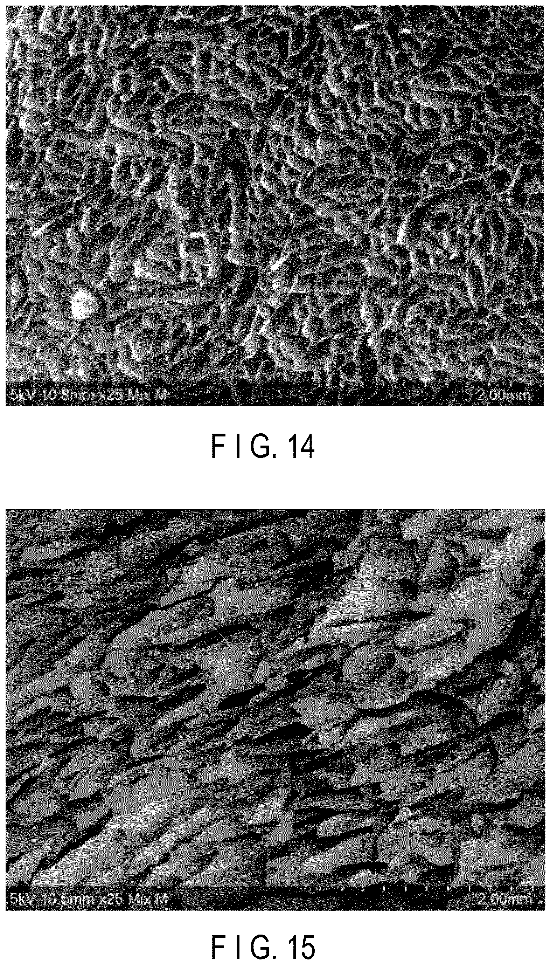

In the present specification, when pores of a porous body observed in both the horizontal cross section and the vertical cross sections have a substantially circular shape and do not have an obviously distorted shape (for example, an obviously flat shape), and the pores are uniformly distributed, such a porous body is regarded as having isotropic properties. For example, as shown in Examples described later, when a porous body having the cross-sectional images shown in FIGS. 5 to 7, a porous body having the cross-sectional images shown in FIGS. 8 to 10, or a porous body having the cross-sectional images shown in FIGS. 11 to 13 is observed, such a porous body can be regarded as having isotropic properties. Alternatively, when a porous body showing the cross-sectional images of FIGS. 14 and 15 is observed, the observed pores clearly have a flat shape. Such a porous body can be regarded as not having isotropic properties.

The technical meaning of the porous body having isotropic properties will be described below.

For example, in the case where the porous body has anisotropy in strength, even if a relatively small force is applied to the porous body, if the force is applied in the direction of low strength of the porous body, the porous body may be broken. Therefore, in an article including a porous body as one of the components, when it is difficult to control the orientation of the porous body or when forces are applied to the porous body from various directions even if the orientation of the porous body is controlled, the above-described problem of breakage may occur if the porous body has anisotropy in strength.

On the other hand, in the case where the porous body does not have anisotropy in strength, the porous body will not be broken in whichever direction force is applied, if the force is relatively small. Therefore, in an article including a porous body as one of the components, even when it is difficult to control the orientation of the porous body or when forces are applied to the porous body from various directions, the porous body is less likely to be broken.

The isotropy is advantageous to the porous body also for other properties, such as thermal insulation and filtration performance.

Further, both a porous body produced by the method described above and a water-containing porous body obtained by adding water to the porous body produced by the method described above fall within the scope of the present invention.

<3. Another Aspect>

(Tobacco Filler for Flavor Inhalation Article)

The porous body can be used as a tobacco filler for a flavor inhalation article. In the case of this use, the porous body is preferably a dried porous body. The porous body can be used as a tobacco filler for a flavor inhalation article by cutting or pulverizing the porous body into a desired size. In the case of this use, the porous body may or may not contain an additional component such as a tobacco material or a tobacco flavor component in the partition walls of the porous body. In the former case, the porous body may be used as a tobacco filler in combination with a tobacco material (e.g., cut tobacco or sheet tobacco), or may be used alone as a tobacco filler. In the latter case, the porous body can be used as a tobacco filler in combination with a tobacco material (e.g., cut tobacco or sheet tobacco).

Therefore, according to another aspect, there is provided a method for producing a tobacco filler for a flavor inhalation article, the method comprising forming a porous body according to "the method for producing a porous body" described above. A tobacco filler for a flavor inhalation article produced by this method is also within the scope of the present invention.

Since the aforementioned tobacco filler for a flavor inhalation article has isotropic properties, it can be incorporated into a flavor inhalation article without considering its orientation during the production of the article, and thus has an excellent production suitability. When the aforementioned tobacco filler for a flavor inhalation article is used in a heating-type flavor inhalation article, the tobacco filler can function as an effective thermal insulator and can also suppress a temperature rise in the heating-type flavor inhalation article.

(Filter for Flavor Inhalation Article)

In addition, the porous body can be used as a filter for a flavor inhalation article. In the case of this use, the porous body is preferably a dried porous body. The porous body can be used as a filter for a flavor inhalation article by cutting or pulverizing the porous body into a desired size. In the case of this use, the porous body may or may not contain an additional component such as an adsorbent (preferably a particulate adsorbent) or a flavor component. In the case of this use, the porous body may be used as a filter in combination with a known acetate tow filter or film filter, or may be used alone as a filter.

Therefore, according to another aspect, there is provided a method for producing a filter for a flavor inhalation article, the method comprising forming a porous body according to "the method for producing a porous body" described above. A filter for a flavor inhalation article produced by this method is also within the scope of the present invention.

Since the aforementioned filter for a flavor inhalation article has isotropic properties, it can be incorporated into a flavor inhalation article without considering its orientation during the production of the article, and thus has an excellent production suitability. In addition, since the aforementioned filter for a flavor inhalation article has isotropic properties, the same filtration performance can be exhibited regardless of in which orientation the filter is disposed in the flavor inhalation article. When the aforementioned filter for a flavor inhalation article is used in a heating-type flavor inhalation article, the filter can function as an effective coolant, and can also cool the aerosol passing through the filter to an appropriate temperature.

(Food Product)

Further, the porous body can be used as a food product. In the case of this use, the porous body may be a dried porous body or a water-containing porous body, and the amount of water can be appropriately adjusted according to the texture of the food product. The porous body can be used as a food product by cutting or pulverizing the porous body into a desired size. In the case of this use, the porous body typically contains an additional component such as a food material or a food component. In the case of this use, the porous body may be used as a food product in combination with an existing food or may be used alone as a food product.

Therefore, according to another aspect, there is provided a method for producing a food product, the method comprising forming a porous body according to "the method for producing a porous body" described above. A food product produced by this method is also within the scope of the present invention.

Since the food product described above has isotropic properties, it has the same texture regardless of which direction it is eaten from, and is advantageous in that it does not cause a strange feeling when eaten. In the case of a dried porous body or a porous body having a relatively low water content (for example, a water content of 0 to less than 0.5 g/g), a "crispy" texture can be obtained, and the porous body can be used as, for example, a rice-cracker-like confectionery. Alternatively, in the case of a porous body having a relatively high water content (for example, a water content of 0.5 to 50 g/g), a "fluffy" texture can be obtained, and the porous body can be used as a substitute for breads and sponge cakes, for example. In addition, the porous body described above can be formed without adding an additive, and thus is excellent in that an additive-free or allergen-free product can be obtained, while a protein often used in a conventional foaming agent is an allergen. When a "polysaccharide having temperature-responsive sol-gel transition characteristics" such as agar, gellan gum, carrageenan, xanthan gum, locust bean gum, or curdlan is used as the polysaccharide, a low-calorie food product can be obtained because such a polysaccharide is low in calories.

<4. Flavor Inhalation Article Containing Porous Body as Tobacco Filler>

A case where the porous body described above (preferably, the dried porous body) is incorporated as a tobacco filler into a flavor inhalation article will be described in more detail.

A flavor inhalation article including the porous body described above as a tobacco filler has the same configuration as that of an existing flavor inhalation article except that a part or all of the tobacco filler of the existing flavor inhalation article is replaced with the above-described porous body.

The porous body described above can be cut or pulverized into a size equivalent to that of ordinary cut tobacco, for example, and the obtained cut or pulverized material can be incorporated into a heating-type flavor inhalation article as a tobacco filler. The cut or pulverized material of the porous body can have a size of a sieve opening of 0.5 to 4 mm, for example. The size of the sieve openings of 0.5 to 4 mm refers to a size included in a range from a size that passes through a sieve opening of 0.5 mm to a size that passes through a sieve opening of 4 mm. Assuming that the tobacco filler contained in one flavor inhalation article is 100% by mass, the above-described porous body can be blended so as to occupy 5 to 100% by mass of the whole tobacco filler.

More specifically, the above-described porous body can be incorporated as a tobacco filler into a burning-type flavor inhalation article or a heating-type flavor inhalation article. The burning-type flavor inhalation article is a flavor inhalation article that provides a flavor to a user by burning a flavor source. The heating-type flavor inhalation article is a flavor inhalation article that provides a flavor to a user by heating, without burning, a flavor source.

Examples of the burning-type flavor inhalation article include a cigarette, a pipe, a *kiseru* (i.e., traditional Japanese pipe for fine cut tobacco), a cigar, and a cigarillo.

The heating-type flavor inhalation article may be heated by a heating device separate from the article or may be heated by a heating device integrated with the article. In the former flavor inhalation article (separate type), the heating-type flavor inhalation article and the heating device are collectively referred to as a "flavor inhalation system" in the present specification.

Examples of the heating-type flavor inhalation article include:

a carbon heat source-type inhalation article that heats a tobacco filler with combustion heat of a carbon heat source (see, for example, WO 2006/073065);

an electric heating-type inhalation article having a flavor inhalation article and a heating device for electrically heating the flavor inhalation article (see, for example, WO 2010/110226); or

a liquid atomizing-type inhalation article in which a liquid aerosol source is heated by a heater to generate an aerosol and a flavor is inhaled together with the aerosol (see, for example, WO 2015/046385).

According to one embodiment, there is provided a flavor inhalation system comprising:

a flavor inhalation article including the porous body described above, an aerosol source, and optionally a tobacco material; and

an aerosol generation device to which the flavor inhalation article is detachably attached, and configured to heat the flavor inhalation article to generate an aerosol from the aerosol source, and to release a flavor component from the porous body and/or the tobacco material by an action of the aerosol.

In this flavor inhalation system, the porous body may contain a tobacco material as an additional component. The tobacco material as an additional component is contained in the partition walls of the porous body. In this case, the flavor inhalation article may or may not further include a tobacco material in a state separated and independent from the porous body. Specifically, the flavor inhalation article may include a tobacco material (for example, cut tobacco) as being mixed with the porous body, and/or may include a tobacco material (for example, sheet tobacco) so as to cover the porous body.

Alternatively, in this flavor inhalation system, the porous body may not contain a tobacco material as an additional component. In this case, the flavor inhalation article can further include a tobacco material in a state separated and independent from the porous body. Specifically, the flavor inhalation article may include a tobacco material (for example, cut tobacco) as being mixed with the porous body, and/or may include a tobacco material (for example, sheet tobacco) so as to cover the porous body.

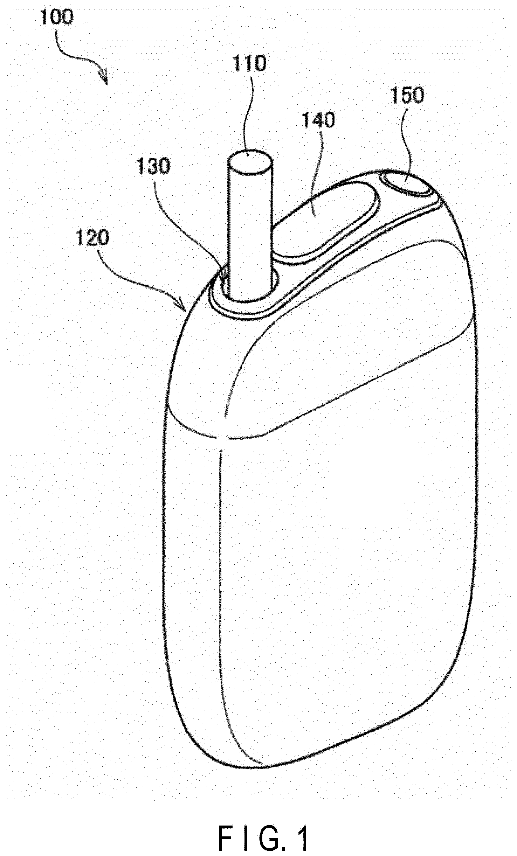

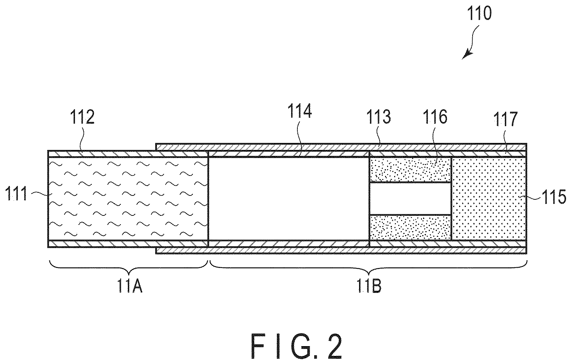

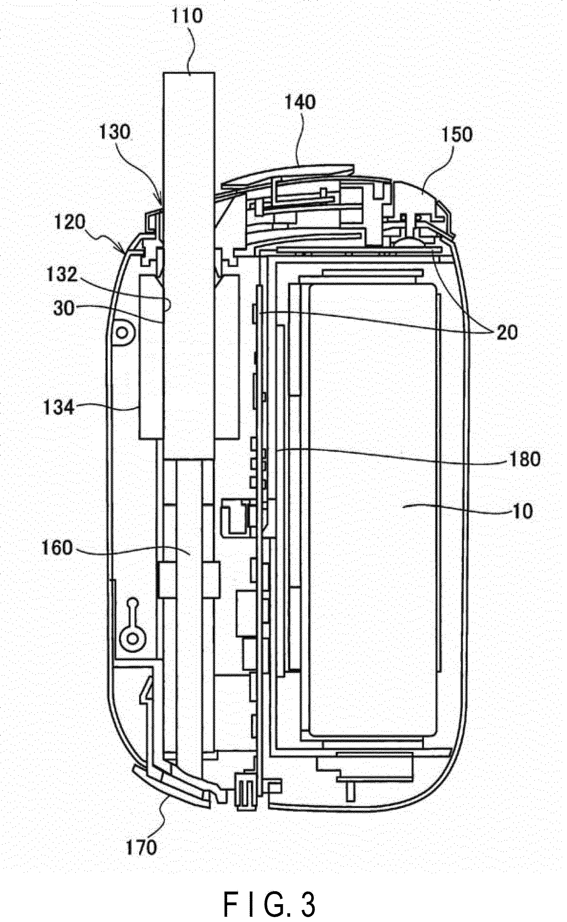

Hereinafter, an example of the flavor inhalation system will be described with reference to FIGS. 1 to 4. FIG. 1 is a perspective view showing an example of a flavor inhalation system. FIG. 2 is a view showing an internal structure of a flavor inhalation article. FIG. 3 is a view showing an internal structure of an aerosol generation device. FIG. 4 is a diagram showing an example of a flavor inhalation article.

As shown in FIG. 1, a flavor inhalation system 100 includes:

a flavor inhalation article 110 including the porous body described above, an aerosol source, and optionally a tobacco material; and

an aerosol generation device 120 to which the flavor inhalation article 110 is detachably attached, and configured to heat the flavor inhalation article 110 to generate an aerosol from the aerosol source, and to release a flavor component from the porous body and/or the tobacco material by an action of the aerosol.

The flavor inhalation article 110 is a replaceable cartridge and has a columnar shape extending along the longitudinal direction. The flavor inhalation article 110 is configured to generate an aerosol and a flavor component by being heated while being inserted into the aerosol generation device 120.

As shown in FIG. 2, the flavor inhalation article 110 includes a base portion 11A including a filler 111 and a first wrapping paper 112 which is wrapped around the filler 111, and a mouthpiece portion 11B forming an end opposite to the base portion 11A. The base portion 11A and the mouthpiece portion 11B are connected by a second wrapping paper 113.

The mouthpiece portion 11B includes a paper tube portion 114, a filter portion 115, and a hollow segment portion 116 disposed between the paper tube portion 114 and the filter portion 115. The paper tube portion 114 is a paper tube formed by wrapping paper into a cylindrical shape, and has a hollow inside. The filter portion 115 includes a filter material such as acetate tow. The hollow segment portion 116 includes a filling layer having one or more hollow channels. The filter material of the filter portion 115 and the filling layer of the hollow segment portion 116 are connected by being covered with a plug wrapper 117. The filling layer is formed of fibers and has a high filling density of fibers, and therefore, during inhalation, air or aerosol flows only through the hollow channel and hardly flows through the filling layer. In the flavor inhalation article 110, when the decrease of aerosol components through filtration in the filter portion 115 is to be reduced, it is effective to shorten the length of the filter portion 115 and replace it with the hollow segment portion 116 in order to increase a delivery amount of aerosol.

Although the mouthpiece portion 11B is composed of three segments, the mouthpiece portion 11B may be composed of one or two segments, or may be composed of four or more segments. For example, the hollow segment portion 116 may be omitted, and the paper tube portion 114 and the filter portion 115 may be disposed adjacent to each other to form the mouthpiece portion 11B.

The longitudinal length of the flavor inhalation article 110 is preferably 40 to 90 mm, more preferably 50 to 75 mm, and further preferably 50 to 60 mm. The circumference of the flavor inhalation article 110 is preferably 15 to 25 mm, more preferably 17 to 24 mm, and further preferably 20 to 23 mm. In addition, in the longitudinal direction of the flavor inhalation article 110, the base portion 11A may have a length of 20 mm, the paper tube portion 114 may have a length of 20 mm, the hollow segment portion 116 may have a length of 8 mm, and the filter portion 115 may have a length of 7 mm, and lengths of these individual segments can be changed as appropriate according to production suitability, required quality, and the like.

The filler 111 includes the porous body described above, an aerosol source, and optionally a tobacco material. The aerosol source is heated at a predetermined temperature to generate an aerosol. The aerosol source may be, for example, glycerin, propylene glycol, triacetin, 1,3-butanediol, and a mixture thereof. The content of the aerosol source in the filler 111 is not particularly limited, and from the viewpoint of generating a sufficient amount of aerosol and providing a good smoking flavor, the content is usually 5% by mass or more, and preferably 10% by mass or more, and usually 50% by mass or less, preferably 20% by mass or less.

The filler 111 includes the above-described porous body and, optionally a tobacco material, as a flavor source. The "porous body" is as described above. Further, as described above, the porous body may contain a tobacco material as an additional component in the partition walls of the porous body.

On the other hand, when the "tobacco material" as an optional component is present, it is present in a state separated and independent from the porous body. Specifically, the tobacco material, which is an optional component, may be present in a state of being mixed with the porous body and/or may be present so as to cover the porous body. In the former case, the tobacco material is, for example, cut tobacco, and in the latter case, the tobacco material is, for example, sheet tobacco.

The material of the cut tobacco used as an optional component is not particularly limited, and publicly known materials such as lamina and stem can be used. The size of the cut tobacco used as the optional component and the method for preparing the same are not particularly limited. For example, dried tobacco leaf cut to have a width of 0.8 to 1.2 mm may be used. Alternatively, dried tobacco leaf may be pulverized and homogenized to have an average particle size of about 20 to 200 $\mu$m, processed into a sheet, and then cut to have a width of 0.8 to 1.2 mm.

In addition, the sheet tobacco used as an optional component may be a tobacco molded body obtained by pulverizing and homogenizing dried tobacco leaves to have an average particle size of about 20 to 200 $\mu$m, and processing the homogenized product into a sheet, or may be a tobacco molded body obtained by molding waste leaf tobacco generated in leaf processing facilities or manufacturing facilities into a sheet shape.

FIG. 4 shows an example of the flavor inhalation article 110. In FIG. 4, the right side shows the appearance of the flavor inhalation article 110, and the left side shows the end face on the side of the filler 111. In FIG. 4, the same components as those in FIG. 2 are denoted by the same reference numerals. The filler 111 is composed of a porous body 111a containing a tobacco material as an additional component in partition walls of the porous body, and a sheet tobacco 111b covering the porous body 111a inside the first wrapping paper 112.

For the first wrapping paper 112, the second wrapping paper 113, and the plug wrapper 117 in the flavor inhalation article 110, the same wrapping paper, tipping paper, and plug wrapper as those used in a cigarette can be used.

As shown in FIG. 3, the aerosol generation device 120 includes an insertion hole 130 into which the flavor inhalation article 110 can be inserted. That is, the aerosol generation device 120 includes an inner tubular member 132 constituting the insertion hole 130. The inner tubular member 132 may be formed of a heat conductive member such as aluminum or stainless steel (SUS).

Further, the aerosol generation device 120 may include a lid portion 140 that closes the insertion hole 130. The lid portion 140 is configured to be slidable between a state where the insertion hole 130 is closed and a state where the insertion hole 130 is exposed (see FIG. 1).

The aerosol generation device 120 may include an air flow path 160 communicating with the insertion hole 130. One end of the air flow path 160 is connected to the insertion hole 130, while the other end of the air flow path 160 communicates with the outside (outside air) of the aerosol generation device 120 at a portion different from the insertion hole 130.

The aerosol generation device 120 may include a lid portion 170 that covers an end portion of the air flow path 160 on the side communicating with the outside air. The lid portion 170 can cover the end portion of the air flow path 160 on the side communicating with the outside air, or can expose the air flow path 160.

The lid portion 170 does not air-tightly close the air flow path 160 even in a state of covering the air flow path 160. That is, even in a state where the lid portion 170 covers the air flow path 160, the outside air can flow into the air flow path 160 via the vicinity of the lid portion 170.

In a state where the flavor inhalation article 110 is inserted into the aerosol generation device 120, the user holds, in the mouth, one end portion of the flavor inhalation article 110, specifically, the mouthpiece portion 11B illustrated in FIG. 2, and performs an inhalation action. The outside air flows into the air flow path 160 through the user's inhalation action. The air flowing into the air flow path 160 passes through the flavor inhalation article 110 in the insertion hole 130 and is guided into an oral cavity of the user.

The aerosol generation device 120 may include a temperature sensor in the air flow path 160 or on an outer surface of a wall portion constituting the air flow path 160. The temperature sensor may be, for example, a thermistor, a thermocouple, or the like. When the user inhales with the mouthpiece portion 11B of the flavor inhalation article 110, the internal temperature of the air flow path 160 or the temperature of the wall portion constituting the air flow path 160 decreases because of the influence of the air flowing through the air flow path 160 from the lid portion 170 side toward a heater 30 side. The temperature sensor can detect the user's inhalation action by measuring this temperature decrease.

The aerosol generation device 120 includes a battery 10, a control unit 20, and a heater 30. The battery 10 stores electric power for use in the aerosol generation device 120. The battery 10 may be a chargeable and dischargeable secondary battery. The battery 10 may be, for example, a lithium ion battery.

The heater 30 may be provided around the inner tubular member 132. The space accommodating the heater 30 and the space accommodating the battery 10 may be separated from each other by a partition wall 180. This can prevent the air heated by the heater 30 from flowing into the space accommodating the battery 10. Therefore, an increase in the temperature of the battery 10 can be suppressed.

The heater 30 preferably has a tubular shape capable of heating the outer periphery of the columnar flavor inhalation article 110. The heater 30 may be, for example, a film heater. The film heater may include a pair of film-like substrates and a resistance heating element sandwiched between the pair of substrates. The film-like substrate is preferably made of a material excellent in heat resistance and electrical insulating properties, and is typically made of polyimide. The resistance heating element is preferably made of one or two or more metal materials such as copper, nickel alloy, chromium alloy, stainless steel, and platinum rhodium, and may be formed of, for example, a base material made of stainless steel. Further, in order to connect the resistance heating element to a power source by a flexible printed circuit (FPC), copper plating may be applied to a connection portion and a lead portion thereof.

Preferably, a heat-shrinkable tube may be provided outside the heater 30. The heat-shrinkable tube is a tube that shrinks in a radial direction through heat, and is made of, for example, a thermoplastic elastomer. The heater 30 is pressed against the inner tubular member 132 by the contraction action of the heat-shrinkable tube. This increases the adhesion between the heater 30 and the inner tubular member 132, thereby increasing conduction of the heat from the heater 30 to the flavor inhalation article 110 via the inner tubular member 132.

The aerosol generation device 120 may include a tubular thermal insulator on the outer side of the heater 30 in the radial direction, preferably on the outer side of the heat-shrinkable tube. The thermal insulator may serve to prevent the outer surface of the housing of the aerosol generation device 120 from reaching an excessively high temperature by blocking the heat of the heater 30. The thermal insulator may be made of an aerogel such as a silica aerogel, a carbon aerogel, or an alumina aerogel. The aerogel as a thermal insulator may typically be a silica aerogel having high thermal insulation performance and relatively low manufacturing costs. However, the thermal insulator may be a fiber-based thermal insulator such as glass wool or rock wool, or a foam-based thermal insulator such as urethane foam or phenolic foam. Alternatively, the thermal insulator may be a vacuum thermal insulator.

The thermal insulator may be provided between the inner tubular member 132 facing the smoking article 110 and an outer tubular member 134 outside the thermal insulator. The outer tubular member 134 may be formed of a heat conductive member such as aluminum or stainless steel (SUS). It is preferable that the thermal insulator be provided in the sealed space.

The control unit 20 may include a control board, a CPU, a memory, and the like. The aerosol generation device 120 may include a notification unit for notifying the user of various kinds of information under the control of the control unit 20. The notification unit may be, for example, a light emitting element such as an LED, a vibration element, or a combination thereof.

Upon detecting an activation request from the user, the control unit 20 starts power supply from the battery 10 to the heater 30. The activation request from the user is made by, for example, an operation of a push button or a slide switch by the user, or an inhalation action of the user. The activation request of the user may be made by pressing a push button 150. More specifically, the activation request of the user may be made by pressing the push button 150 in a state where the lid portion 140 is opened. Alternatively, the activation request of the user may be made by detection of an inhalation action of the user. The user's inhalation action can be detected by, for example, a temperature sensor as described above.

<5. Preferred Embodiments>

The preferred embodiments are summarized below.

[1] A method for producing a porous body, the method comprising:

supplying an inert gas to a solution of a polysaccharide to prepare an inert gas-supplied liquid;
pressure-reducing the inert gas-supplied liquid to form a foam; and
drying the foam by reduced-pressure drying to form a porous body.

[2] The method according to [1], wherein the reduced-pressure drying is freeze-drying.
[3] The method according to [1] or [2], wherein the polysaccharide is a polysaccharide having temperature-responsive sol-gel transition characteristics.
[4] The method according to any one of [1] to [3], wherein the polysaccharide is agar, gellan gum, carrageenan, xanthan gum, locust bean gum, or curdlan, or any combination thereof.
[5] The method according to any one of [1] to [4], wherein the polysaccharide is agar or gellan gum.
[6] The method according to any one of [1] to [5], wherein the polysaccharide is agar.
[7] The method according to any one of [1] to [6], wherein the solution of the polysaccharide has a viscosity of 0.01 to 50 [Pa·s] under conditions of a temperature of 45 °C and atmospheric pressure.
[8] The method according to any one of [1] to [7], wherein the solution of the polysaccharide has a viscosity of 0.8 to 20 [Pa·s] under conditions of a temperature of 45 °C and atmospheric pressure.
[9] The method according to any one of [1] to [8], wherein the solution of the polysaccharide is a solution containing agar in an amount of 10 to 45 g with respect to 750 g of water.
[10] The method according to any one of [1] to [9], wherein the solution of the polysaccharide is a solution containing agar in an amount of 30 to 40 g with respect to 750 g of water.

[11] The method according to any one of [1] to [10], wherein the solution of the polysaccharide has a temperature higher by 15 to 55 °C than a gelation temperature of the solution of the polysaccharide immediately before the supplying the inert gas.

[12] The method according to any one of [1] to [11], wherein the solution of the polysaccharide has a temperature higher by 25 to 45 °C than a gelation temperature of the solution of the polysaccharide immediately before the supplying the inert gas.

[13] The method according to any one of [1] to [12], wherein the inert gas-supplied liquid has a temperature higher by 5 to 25 °C than a gelation temperature of the solution of the polysaccharide immediately before the pressure-reducing for forming the foam.

[14] The method according to any one of [1] to [13], wherein the inert gas-supplied liquid has a temperature higher by 9 to 15 °C than a gelation temperature of the solution of the polysaccharide immediately before the pressure-reducing for forming the foam.

[15] The method according to any one of [1] to [14], wherein the supplying the inert gas is performed by bubbling the inert gas into the solution of the polysaccharide and/or shaking the solution of the polysaccharide in a presence of the inert gas.

[16] The method according to any one of [1] to [15], wherein the supplying the inert gas is performed by bubbling the inert gas into the solution of the polysaccharide and then shaking the solution of the polysaccharide.

[17] The method according to any one of [1] to [16], wherein the supplying the inert gas is performed by supplying the inert gas to the solution of the polysaccharide contained in a sealed container while pressurizing the inert gas.

[18] The method according to any one of [1] to [17], wherein the supplying the inert gas is performed by bubbling the inert gas into the solution of the polysaccharide contained in a sealed container while pressurizing the inert gas, and then shaking the solution of the polysaccharide.

[19] The method according to any one of [1] to [18], wherein the inert gas is $COz$, $N_2O$, air, or $N_2$.

[20] The method according to any one of [1] to [19], wherein the inert gas is $CO_2$ or $N_2O$.

[21] The method according to any one of [1] to [20], wherein the inert gas is $CO_2$.

[22] The method according to any one of [1] to [21], wherein the supplying the inert gas is performed by supplying the inert gas at a partial pressure higher than 0 kPa and equal to or lower than 4000 kPa.

[23] The method according to any one of [1] to [22], wherein the supplying the inert gas is performed by supplying the inert gas at a partial pressure equal to or higher than 800 kPa.

[24] The method according to any one of [1] to [23], wherein the supplying the inert gas is performed by supplying the inert gas at a partial pressure of 800 to 4000 kPa.

[25] The method according to any one of [1] to [24], further comprising gelling the foam by allowing the foam to stand under a condition of 15 to 25 °C between the pressure-reducing for forming the foam and the drying.

[26] The method according to any one of [1] to [25], wherein the pressure-reducing for forming the foam is pressure-reducing that causes a pressure difference to be greater than 0 kPa and equal to or less than 4000 kPa before and after the pressure-reducing.

[27] The method according to any one of [1] to [26], wherein the pressure-reducing for forming the foam is pressure-reducing that causes a pressure difference to be equal to or greater than 800 kPa before and after the pressure-reducing.

[28] The method according to any one of [1] to [27], wherein the pressure-reducing for forming the foam is pressure-reducing that causes a pressure difference to be 800 to 4000 kPa before and after the pressure-reducing.

[29] The method according to any one of [1] to [28], wherein the supplying the inert gas is performed by supplying the inert gas to the solution of the polysaccharide contained in a sealed container while pressurizing the inert gas, and the pressure-reducing for forming the foam is performed by opening the sealed container.

[30] The method according to any one of [1] to [29], wherein the supplying the inert gas is performed in a sealed container under a pressure higher than the atmospheric pressure, for example, under a pressure of 1000 to 1300 kPa, and the pressure-reducing for forming the foam is performed by opening the sealed container.

[31] The method according to any one of [1] to [30], wherein the inert gas-supplied liquid contains no foaming agent other than the inert gas.

[32] The method according to any one of [1] to [31], wherein the reduced-pressure drying is performed under a condition of 10 kPa or less, preferably 1 kPa or less, and more preferably 0 to 0.7 kPa.

[33] The method according to any one of [1] to [32], wherein the reduced-pressure drying is drying consisting only of a drying step under a reduced-pressure condition.

[34] The method according to any one of [1] to [33], wherein supercritical drying is performed instead of the reduced-pressure drying.

[35] The method according to any one of [1] to [34], wherein the inert gas-supplied liquid further contains a dispersoid.

[36] The method according to [35], wherein the dispersoid is a tobacco material or a food material.

[37] The method according to [35] or [36], wherein the dispersoid is a tobacco material.

[38] The method according to any one of [35] to [37], wherein the dispersoid has a form of particles.

[39] The method according to any one of [35] to [39], wherein the dispersoid has an average particle size of 500 μm or less, preferably 10 to 500 μm.

[40] The method according to any one of [35] to [39], wherein the dispersoid is contained in the porous body in an amount of 0 to 570% by mass, preferably 30 to 570% by mass, with respect to the polysaccharide.

[41] The method according to any one of [1] to [40], wherein the inert gas-supplied liquid further contains a solute other than the polysaccharide.

[42] The method according to [41], wherein the solute is a tobacco flavor component or a food component.

[43] The method according to [41] or [42], wherein the solute is a tobacco flavor component.

[44] The method according to any one of [41] to [43], wherein the solute is contained in the porous body in an amount of 0 to 570% by mass, preferably 0 to 50% by mass, with respect to the polysaccharide.

[45] A method for producing a water-containing porous body, the method comprising adding water to the porous body obtainable by the method according to any one of [1] to [44] to form a water-containing porous body.

[46] The method according to [45], wherein the water is added in an amount of less than 0.5 parts by mass with respect to 1 part by mass of the porous body.

[47] The method according to [45] or [46], wherein the water is added in an amount of less than 0.3 parts by mass with respect to 1 part by mass of the porous body.

[48] The method according to [45], wherein the water is added in an amount of 0.5 to 50 parts by mass with respect to 1 part by mass of the porous body.

[49] The method according to [45] or [48], wherein the water is added in an amount of 1.0 to 40 parts by mass with respect to 1 part by mass of the porous body.

[50] A porous body obtainable by the method according to any one of [1] to [49].

[51] A method for producing a tobacco filler for a flavor inhalation article, the method comprising forming a porous body by the method according to any one of [1] to [49].

[52] A method for producing a filter for a flavor inhalation article, the method comprising forming a porous body by the method according to any one of [1] to [49].

[53] A method for producing a food product, the method comprising forming a porous body by the method according to any one of [1] to [49].

[54] A tobacco filler for a flavor inhalation article obtainable by the method according to [51].

[55] A filter for a flavor inhalation article obtainable by the method according to [52].

[56] A food product obtainable by the method according to [53].

[57] A flavor inhalation article comprising, as a tobacco filler, a porous body obtainable by the method according to any one of [1] to [49].

[58] A flavor inhalation article comprising, as a tobacco filler, a porous body obtainable by the method according to [37] or [43].

[EXAMPLES]

[Example 1] Observation of Porous Body

Porous bodies of the following Samples 1 to 5 were prepared and observed with a scanning electron microscope (SEM).

Sample 1: a porous body containing no additional component
Sample 2: a porous body containing a dispersoid as an additional component
Sample 3: a porous body containing a solute as an additional component
Sample 4: a porous body prepared without supplying an inert gas
Sample 5: a porous body prepared not by freeze-drying but by natural drying

<1-1. Preparation of Porous Body>

<Sample 1>

(1) 17.5 g of powdered agar (special grade, Wako Pure Chemical Industries, Ltd.) was dissolved in 375 mL of water and warmed to 90 °C. The obtained aqueous agar solution has a viscosity of 3.8 [Pa·s] when placed under conditions of a temperature of 45 °C and atmospheric pressure.

(2) The aqueous agar solution (90 °C) was cooled to 60 °C.

(3) The aqueous agar solution (60 °C) was placed in a sealed container, and $CO_2$ gas was supplied to the aqueous agar solution. The supply of $CO_2$ gas was performed by bubbling COz gas into the aqueous agar solution using ESPUMA SPARKLING (NIPPON TANSAN GAS CO., LTD). The amount of supplied COz gas was 16 g, and the partial pressure of $CO_2$ gas was 1124 kPa.

(4) The liquid to which $CO_2$ gas was supplied was shaken for 7 minutes.

(5) The sealed container was opened, and the obtained mousse-state foam was poured into a vat. The difference between the pressures before and after opening the sealed container was 1124 kPa. Immediately after opening the sealed container, the mousse-state foam had a temperature of 45 °C. In this experiment and in subsequent experiments, the temperature of the liquid could not be measured before opening the sealed container. Therefore, the temperature of the liquid was measured immediately after opening the sealed container, and this temperature was regarded as the temperature of the liquid immediately before opening the sealed container.

(6) The foam was left for 30 minutes or more to be gelled, and then the gel-state foam was left until it returned to room temperature (25 °C).

(7) The gel-state foam was placed in a freezer and frozen, and then dried until the water content became about 0 (about 3 days). Drying was carried out under a reduced pressure of 0.61 kPa or less. Thus, a porous body was prepared.

<Sample 2>

(1) First, fine tobacco powder was prepared as an additional component. To be specific, cut tobacco portions taken out from cigarettes (MEVIUS SUPER LIGHTS (Japan Tobacco Inc.)) were crushed with a mill, and those having a sieve opening size of 500 $\mu$m or less were selected.

(2) 4.4 g of powdered agar (special grade, Wako Pure Chemical Industries, Ltd.) was dissolved in 375 mL of water and warmed to 90 °C.

(3) 13.1 g of fine tobacco powder was added to and dispersed in the aqueous agar solution (90 °C). The resulting aqueous agar solution containing the fine tobacco powder had a viscosity of 0.02 [Pa·s] when placed under conditions of a temperature of 45 °C and atmospheric pressure.

(4) The aqueous agar solution containing the fine tobacco powder (90 °C) was cooled to 60 °C.

(5) The aqueous agar solution containing the fine tobacco powder (60 °C) was placed in a sealed container, and $CO_2$ gas was supplied to the aqueous agar solution. The supply of $CO_2$ gas was performed by bubbling $CO_2$ gas into the aqueous agar solution using ESPUMA SPARKLING (NIPPON TANSAN GAS CO., LTD). The amount of supplied $CO_2$ gas was 16 g, and the partial pressure of $CO_2$ gas was 1124 kPa.

(6) The liquid to which $CO_2$ gas was supplied was shaken for 7 minutes.

(7) The sealed container was opened, and the obtained mousse-state foam was poured into a vat. The difference between the pressures before and after opening the sealed container was 1124 kPa. Immediately after opening the sealed container, the mousse-state foam had a temperature of 45 °C.

(8) The foam was left for 30 minutes or more to be gelled, and then the gel-state foam was left until it returned to room temperature (25 °C).

(9) The gel-state foam was placed in a freezer and frozen, and then dried until the water content became about 0 (about 3 days). Drying was carried out under a reduced pressure of 0.61 kPa or less. Thus, a porous body was prepared.

<Sample 3>

(1) 10.0 g of powdered agar (special grade, Wako Pure Chemical Industries, Ltd.) was dissolved in 375 mL of water and warmed to 90 °C.

(2) 1.0 g of salt was added to and dissolved in the aqueous agar solution (90 °C). The resulting aqueous agar solution containing salt had a viscosity of 1.3 [Pa·s] when placed under conditions of a temperature of 45 °C and atmospheric pressure.

(3) The aqueous agar solution (90 °C) was cooled to 60 °C.

(4) The aqueous agar solution (60 °C) was placed in a sealed container, and $CO_2$ gas was supplied to the aqueous agar solution. The supply of $CO_2$ gas was performed by bubbling COz gas into the aqueous agar solution using ESPUMA SPARKLING (NIPPON TANSAN GAS CO., LTD). The amount of supplied $CO_2$ gas was 16 g, and the partial pressure of COz gas was 1124 kPa.

(5) The liquid to which $CO_2$ gas was supplied was shaken for 7 minutes.

(6) The sealed container was opened, and the obtained mousse-state foam was poured into a vat. The difference between the pressures before and after opening the sealed container was 1124 kPa. Immediately after opening the sealed container, the mousse-state foam had a temperature of 45 °C.

(7) The foam was left for 30 minutes or more to be gelled, and then the gel-state foam was left until it returned to room temperature (25 °C).

(8) The gel-state foam was placed in a freezer and frozen, and then dried until the water content became about 0 (about 3 days). Drying was carried out under a reduced pressure of 0.61 kPa or less. Thus, a porous body was prepared.

<Sample 4>

(1) 17.5 g of powdered agar (special grade, Wako Pure Chemical Industries, Ltd.) was dissolved in 375 mL of water and warmed to 90 °C. The obtained aqueous agar solution (90 °C) was poured into a vat.

(2) The aqueous agar solution was left for 30 minutes or more to be gelled, and then the gelled product was left until it returned to room temperature (25 °C).

(3) The gelled product was placed in a freezer and frozen, and then dried until the water content became about 0 (about 7 days). Drying was carried out under a reduced pressure of 0.61 kPa or less. Thus, a porous body was prepared.

<Sample 5>

(1) 17.5 g of powdered agar (special grade, Wako Pure Chemical Industries, Ltd.) was dissolved in 375 mL of water and warmed to 90 °C.

(2) The aqueous agar solution (90 °C) was cooled to 60 °C.

(3) The aqueous agar solution (60 °C) was placed in a sealed container, and $CO_2$ gas was supplied to the aqueous agar solution. The supply of $CO_2$ gas was performed by bubbling $CO_2$ gas into the aqueous agar solution using ESPUMA SPARKLING (NIPPON TANSAN GAS CO., LTD). The amount of supplied $CO_2$ gas was 16 g, and the partial pressure of $CO_2$ gas was 1124 kPa.

(4) The liquid to which COz gas was supplied was shaken for 7 minutes.

(5) The sealed container was opened, and the obtained mousse-state foam was poured into a vat. The difference between the pressures before and after opening the sealed container was 1124 kPa. Immediately after opening the sealed container, the mousse-state foam had a temperature of 45 °C.

(6) The foam was left for 30 minutes or more to be gelled, and then the gel-state foam was left until it returned to room temperature (25 °C).

(7) The gel-state foam was left in a draft chamber and dried by natural drying (about 3 days). Thus, a porous body was prepared.

<1-2. Observation Method>

The porous bodies of Samples 1 to 5 were observed with a scanning electron microscope (SEM) at a magnification of 30 times. Specifically, each sample was cut along a cross section in a direction perpendicular to gravity (xy cross section), a cross section in a direction parallel to gravity (yz cross section), and a cross section orthogonal to both the xy cross section and the yz cross section (zx cross section), and the three cross sections (xy cross section, yz cross section, and zx cross section) were observed. The porous bodies of Samples 1 to 5 (water content: 0) were subjected to humidity conditioning at 22 °C and 60 RH%, and imaging was performed on the humidity-conditioned samples.

<1-3. Observation Results>

SEM images of Sample 1 are shown in FIGS. 5 to 7, SEM images of Sample 2 are shown in FIGS. 8 to 10, SEM images of Sample 3 are shown in FIGS. 11 to 13, and SEM images of Sample 4 are shown in FIGS. 14 and 15.

<Sample 1>

In the porous body of Sample 1, the pores had a substantially circular shape and had no flat shape in all of the horizontal cross section (xy cross section) and the vertical cross sections (yz cross section and zx cross section). In the porous body of Sample 1, pores were uniformly distributed in all of the horizontal cross section (xy cross section) and the vertical cross sections (yz cross section and zx cross section). Thus, in the porous body of Sample 1, almost the same porous structure was observed regardless of the observation direction. That is, it was confirmed that the porous body of Sample 1 had substantially spherical pores uniformly and had isotropic properties.

As a modification of Sample 1, a porous body was produced in the same manner as in Sample 1 except that drying consisting only of a drying step under reduced-pressure conditions was performed instead of freeze-drying (i.e., drying consisting of a freezing step and a subsequent drying step under reduced-pressure conditions). Also in the modification of Sample 1, it was confirmed that the obtained porous body had substantially spherical pores uniformly and had isotropic properties, similarly to Sample 1.

<Sample 2>

It was observed that the porous body of Sample 2 contained fine tobacco powder in walls (partition walls) separating the pores of the porous body. In the porous body of Sample 2, the pores had a substantially circular shape and had no flat shape in all of the horizontal cross section (xy cross section) and the vertical cross sections (yz cross section and zx cross section). In the porous body of Sample 2, pores were uniformly distributed in all of the horizontal cross section (xy cross section) and the vertical cross sections (yz cross section and zx cross section). As described above, although the porous body of Sample 2 contained the dispersoid as an additional component, almost the same porous structure was observed regardless of the observation direction. That is, it was confirmed that the porous body of Sample 2 had substantially spherical pores uniformly and had isotropic properties.

As a modification of Sample 2, a porous body was produced in the same manner as in Sample 2 except that 13.1 g of powdered agar and 4.4 g of fine tobacco powder were used. In the modification of Sample 2, the aqueous agar solution containing fine tobacco powder had a viscosity of 3.2 [Pa·s] under conditions of a temperature of 45 °C and atmospheric pressure. Also in the modification, it was confirmed that the obtained porous body had substantially spherical pores uniformly and had isotropic properties, similarly to Sample 2.

<Sample 3>

In the porous body of Sample 3, which contained salt as an additional component, the observed pores had a substantially circular shape and had no flat shape in all of the horizontal cross section (xy cross section) and the vertical cross sections (yz cross section and zx cross section). In the porous body of Sample 3, pores were uniformly distributed in all of the horizontal cross section (xy cross section) and the vertical cross sections (yz cross section and zx cross section). As described above, although the porous body of Sample 3 contained the solute as an additional component, almost the same porous structure was observed regardless of the observation direction. That is, it was confirmed that the porous body of Sample 3 had substantially spherical pores uniformly and had isotropic properties.

<Sample 4>

The porous body of Sample 4 had a smaller volume expansion rate when the sealed container was opened, as compared to the porous bodies of Samples 1 to 3. The size of the observed pores in the porous body of Sample 4 was smaller than those in the porous bodies of Samples 1 to 3. In the porous body of Sample 4, the observed pores had a clearly flat shape in the vertical cross section (yz cross section). That is, it was confirmed that the porous body of Sample 4 had anisotropic properties. It is considered that these results were obtained because the porous body of Sample 4 was prepared without supplying an inert gas, and thus bubbles were not successfully generated when the sealed container was opened.

<Sample 5>

In the porous body of Sample 5, voids were clearly conspicuous even when observed with the naked eye, as compared to the porous bodies of Samples 1 to 3. Therefore, an SEM image could not be obtained. It is considered that these results were obtained because the walls (partition walls) separating the pores of the porous body could not be satisfactorily formed due to the natural drying, and the porous structure could not be formed.

[Example 2] Relationship between Water Content and Hardness of Water-containing Porous Body

In Example 2, the relationship between a water content and a hardness of the water-containing porous body was examined.

<2-1. Method>

<Water Content of Water-Containing Porous Body>

The "water content of the water-containing porous body" was calculated as follows:

A sample cut into a 1 cm$^3$ cube was placed in a weighing bottle with a lid, and water was completely removed from the porous body over 3 hours in a drying machine set at 105 °C. Thereafter, the weighing bottle containing the porous body was cooled to room temperature in a desiccator containing silica gel to complete the drying. Using the values of the sample weight before drying and the sample weight after drying, the water content was calculated by the following formula:

$$\text{Water content (g/g-dry)} = \text{weight change before and after drying (amount of water loss) / sample weight after drying}$$

<Hardness of Water-Containing Porous Body>

The "hardness of the water-containing porous body" was measured by deforming the sample by applying a load, and after releasing the load, measuring how much the shape of the sample was recovered. That is, the "hardness of the water-containing porous body" is represented by the recovery rate.

The "recovery rate of the water-containing porous body" refers to a value calculated as follows: A load was applied to the sample until the sample height was 75% deformed (i.e., to a height of 25% of the original height) and then the load was released for a period of time (1 minute). The sample height was then measured. Using the values of the sample height before the load was applied and the sample height after the load was released, the recovery rate was calculated by the following equation:

$$\text{Recovery rate} = \text{(sample height after release of load / sample height before application of load)}$$

A value of the recovery rate closer to 1 indicates a better return to the original shape after release of the load (i.e., greater elasticity and fluffy texture).

<2-2. Results>

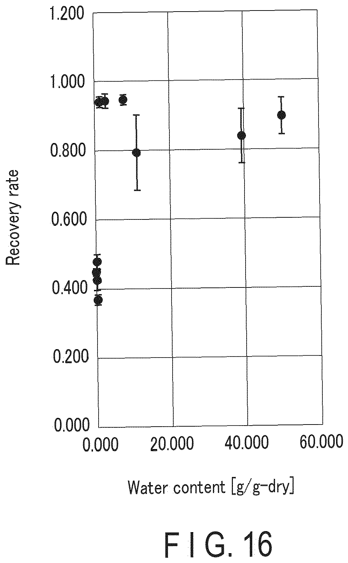

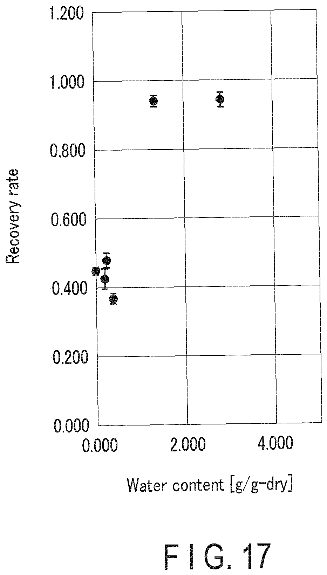

The relationship between a water content and a recovery rate of the water-containing porous body is shown in FIGS. 16 and 17. FIG. 16 shows the recovery rates of samples having water contents up to about 50 g/g and FIG. 17 shows the recovery rates of samples having water contents up to about 2.8 g/g.

FIGS. 16 and 17 show the following. When the water-containing porous body had a water content of about 0.24 g/g or less, the recovery rate was less than 0.5, and the porous body did not satisfactorily return to its original shape after the load was released (i.e., the porous body was less elastic and had a crispy texture). On the other hand, when the water-containing porous body had a water content of about 1.3 g/g or more, the recovery rate was close to 1, and the porous body satisfactorily returned to its original shape after the load was released (i.e., the porous body had high elasticity and a fluffy texture).

From these results, the following is considered. The "porous body having a crispy texture" can be produced by adding water so as to have a water content of, for example, 0 to less than 0.5 g/g, and preferably 0 to 0.3 g/g, and the "porous body having a fluffy texture" can be produced by adding water so as to have a water content of, for example, 0.5 g/g or more, preferably 0.5 to 50 g/g, and more preferably 1.0 to 40 g/g.

[Example 3] Relationship between Parameter during Preparation of Porous Body and Apparent Density of Foam

In Example 3, the relationship between a parameter during the preparation of the porous body and an apparent density of the gel-state foam was examined. As parameters in the preparation of the porous body, the viscosity of the aqueous agar solution, the $CO_2$ partial pressure, and the temperature of the aqueous agar solution after pressure release were changed.

In this example, the apparent density was determined by measuring the apparent density of the gel-state foam before freeze-drying. The gel-state foam is then subjected to a freeze-drying step to form a porous body, and the freeze-drying step removes water while suppressing shrinkage of the gel. Therefore, it is considered that as the apparent density of the gel-state foam becomes smaller, the apparent density of the porous body obtained after drying also becomes smaller, and the porous body having a smaller apparent density is particularly excellent as a porous body.

<3-1. Method>

First, the measurement method used in the experiment is described below.

<Method for Measuring Viscosity of Aqueous Agar Solution>

The aqueous agar solution was placed in a 500 mL beaker and mixed with a stirrer for about 1 minute. The temperature of the solution was measured in its central portion by a thermocouple. Immediately thereafter, a spinning rotor (M1 or M4) of a B-type rotary viscosimeter (TVB-10, TOKI SANGYO CO., LTD.) was placed in the beaker, and the viscosity was measured at a rotation speed of 30 rpm for 30 seconds. The average value thereof was defined as the "viscosity of aqueous agar solution".

<Method for Measuring Apparent Density>

The apparent density was calculated by the following formula:

$$\rho_A = W_A/V_A$$

where $W_A$ is a weight [g] of the gel-state foam, and $V_A$ is a volume [cc] of the gel-state foam.
The gel-state foam was extracted into a cylindrical shape with a circular mold having a 3 cm diameter, and the height of the center portion of the gel-state foam was measured with a caliper. Thereafter, the weight of the gel-state foam was measured using a balance. The above measurement was repeated three times, and the arithmetic average thereof was defined as "apparent density of the gel-state foam".

<Method for Calculating $CO_2$ Partial Pressure>

The $CO_2$ partial pressure was calculated from the van der Waals equation.

$$P_{CO2} = \{nRT/(V-nb)\} - a(n/V)^2$$

where $P_{CO2}$ is a COz partial pressure [unit], n is a mole fraction of $CO_2$, R is a gas constant, T is an ambient temperature, V is a void volume of the ESPUMA container, and a and b are van der Waals coefficients.

<3-2. Results>

<Relationship between Viscosity of Aqueous Agar Solution and Apparent Density of Foam>

A gel-state foam was prepared in the same manner as in Sample 1 of Example 1. The viscosity of the aqueous agar solution was changed by changing the concentration of agar. Table 1 shows the preparation conditions of the gel-state foams and the apparent densities of the gel-state foams. In Table 1, "agar viscosity" represents the viscosity at the temperature when the aqueous agar solution overflowed after the pressure was released (i.e., 45 °C).

[Table 1]

| Blending amount | Agar | 9 | 10 | 20 | 30 | 40 | 45 |
|---|---|---|---|---|---|---|---|
| | Water | 9 | 750 | | | | |
| Agar concentration | | g/g-H2O | 1.3 | 2.7 | 4 | 5.3 | 6 |
| Agar viscosity | | Pa·s | 0.01 | 0.07 | 0.81 | 18.54 | 49.25 |
| $CO_2$ partial pressure | | kPa | 996 | | | | |
| Shaking time | | min | 7 | | | | |
| Apparent density | | g/cc | 0.98 | 0.66 | 0.52 | 0.52 | 0.65 |

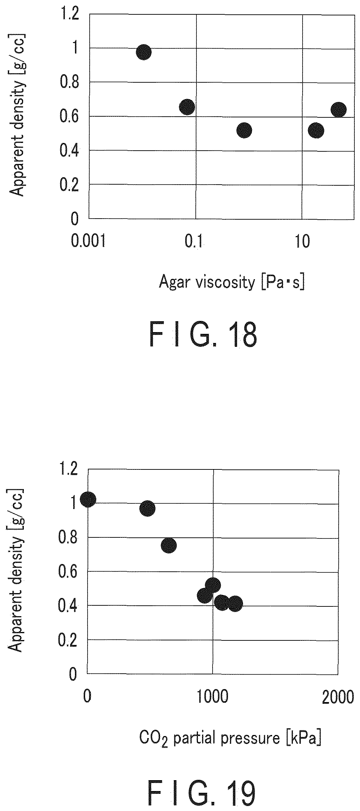

The relationship between a viscosity of the aqueous agar solution and an apparent density of the foam is shown in FIG. 18.
From the results in FIG. 18 and Table 1, it is understandable that in the case of producing a porous body using agar as a polysaccharide, the aqueous agar solution preferably contains agar in an amount of 10 to 45 g with respect to 750 g of water, and more preferably contains agar in an amount of 30 to 40 g with respect to 750 g of water.

It is considered that as the agar concentration becomes lower, the apparent density becomes larger because the viscosity of agar is smaller and the aqueous agar solution does not hold gas bubbles easily, so that it is easy for the gas in the gas bubbles to escape. On the other hand, it is considered that as the agar concentration becomes higher, the apparent density becomes larger because the viscosity of the agar is higher and the liquid does not easily flow during shaking, so that the mixing of the liquid and the COz gas is not promoted and bubbles are not easily formed.

<Relationship between $CO_2$ Partial Pressure and Apparent Density of Foam>

A gel-state foam was prepared in the same manner as in Sample 1 of Example 1. The partial pressure of $CO_2$ gas (hereinafter referred to as $CO_2$ partial pressure) was changed by changing the amount of added $CO_2$. In addition to COz, air and water vapor are contained in the container, but the amounts thereof are constant. Therefore, as the COz partial pressure increases, the total pressure increases, thereby increasing the difference from the atmospheric pressure. Table 2 shows the preparation conditions of the gel-state foams and the apparent densities of the gel-state foams.

[Table 2]

| Blending amount | Agar | 9 | 35 | 11.7 | 23.3 | 11.6 | 35 | 17.5 | 21 |
|---|---|---|---|---|---|---|---|---|---|
| | Water | 9 | 750 | 250 | 500 | 250 | 750 | 375 | 450 |
| Agar concentration | | g/g-H2O | 4.7 | | | | | | |
| Amount of added $CO_2$ | | 9 | 0 | 8 | 8 | 16 | 8 | 16 | 16 |
| $CO_2$ partial pressure | | kPa | 0 | 477 | 648 | 935 | 1008 | 1073 | 1178 |
| Shaking time | | min | 7 | | | | | | |
| Apparent density | | g/cc | 1.0 | 0.97 | 0.75 | 0.46 | 0.52 | 0.42 | 0.41 |

The relationship between a COz partial pressure and an apparent density of the foam is shown in FIG. 19.
From the results in FIG. 19 and Table 2, it is understandable that in the supply of the $CO_2$ gas, $CO_2$ is preferably supplied at a partial pressure greater than 0 kPa and equal to or less than 4000 kPa, more preferably supplied at a partial pressure equal to or greater than 800 kPa, and even more preferably supplied at a partial pressure of 800 to 4000 kPa.
It is considered that as the amount of COz to be added becomes smaller and the COz partial pressure becomes smaller, the amount of gas to be mixed with the aqueous agar solution is reduced and the force for swelling the aqueous agar solution after pressure release is weakened, so that the apparent density is increased.

<Relationship between Temperature of Aqueous Agar Solution after Pressure Release and Apparent Density of Foam>

A gel-state foam was prepared in the same manner as in Sample 1 of Example 1. The temperature of the aqueous agar solution after pressure release was changed by changing the temperature of the aqueous agar solution immediately before supply of $CO_2$ (referred to as "introduction temperature" in Table 3). As described before, since the temperature of the agar aqueous solution could not be measured before the pressure was released in this experiment as well, the temperature of the agar aqueous solution was measured immediately after the pressure was released, and this was regarded as the temperature of the aqueous agar solution immediately before the pressure was released. Table 3 shows the preparation conditions of the gel-state foams and the apparent densities of the gel-state foams.

[Table 3]

| Blending amount | Agar | 9 | 17.5 | | | | | |
|---|---|---|---|---|---|---|---|---|
| | Water | 9 | 375 | | | | | |
| Agar concentration | | g/g-H$_2$O | 4.7 | | | | | |
| Amount of added $CO_2$ | | 9 | 16 | | | | | |
| $CO_2$ partial pressure | | kPa | 1124 | | | | | |
| Shaking time | | min | 7 | | | | | |
| Introduction temperature | | °C | 88.9 | 69.8 | 65.1 | 60.5 | 55.2 | 50.1 |

(continued)

| Temperature after pressure release | °C | 57.3 | 50.5 | 48.6 | 44.4 | 42.0 | 39.2 |
|---|---|---|---|---|---|---|---|
| Apparent density | g/cc | 0.53 | 0.47 | 0.38 | 0.43 | 0.61 | 0.71 |

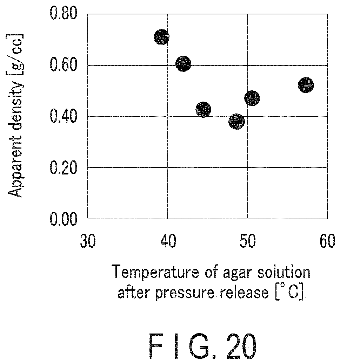

The relationship between a temperature of the aqueous agar solution after pressure release and an apparent density of the foam is shown in FIG. 20.

From the results in FIG. 20 and Table 3, it is understandable that the liquid to which $CO_2$ has been supplied preferably has a temperature higher by 5 to 25 °C than the gelation temperature of the aqueous agar solution, and more preferably has a temperature higher by 9 to 15 °C than the gelation temperature of the aqueous agar solution, immediately before the pressure-reduction. In addition, from the results of FIG. 20 and Table 3, it is understandable that the aqueous agar solution preferably has a temperature higher by 15 to 55 °C than the gelation temperature of the aqueous agar solution, and more preferably has a temperature higher by 25 to 45 °C than the gelation temperature of the aqueous agar solution, immediately before the supply of COz.

It is considered that as the temperature before the supply of $CO_2$ (introduction temperature) becomes lower and accordingly the temperature of the aqueous agar solution immediately before the pressure release becomes lower, the viscosity of the agar increases and the aqueous agar solution is not easily swelled when the pressure is released, so that the apparent density is increased. It is considered that, on the other hand, as the temperature before the supply of $CO_2$ (introduction temperature) becomes higher and accordingly the temperature of the aqueous agar solution immediately before the pressure release becomes higher, it takes a long time for the aqueous agar solution to be gelled and the gas in the gas bubbles is easy to escape, so that the apparent density is increased.

**Claims**

1.   A method for producing a porous body, the method comprising:

   supplying an inert gas to a solution of a polysaccharide to prepare an inert gas-supplied liquid;
   pressure-reducing the inert gas-supplied liquid to form a foam; and
   drying the foam by reduced-pressure drying to form a porous body.

2.   The method according to claim 1, wherein the reduced-pressure drying is freeze-drying.

3.   The method according to claim 1 or 2, wherein the polysaccharide is a polysaccharide having temperature-responsive sol-gel transition characteristics.

4.   The method according to any one of claims 1 to 3, wherein the polysaccharide is agar, gellan gum, carrageenan, xanthan gum, locust bean gum, or curdlan, or any combination thereof.

5.   The method according to any one of claims 1 to 4, wherein the solution of the polysaccharide has a viscosity of 0.01 to 50 [Pa-s] under conditions of a temperature of 45 °C and atmospheric pressure.

6.   The method according to any one of claims 1 to 5, wherein the solution of the polysaccharide has a temperature higher by 15 to 55 °C than a gelation temperature of the solution of the polysaccharide immediately before the supplying the inert gas.

7.   The method according to any one of claims 1 to 6, wherein the inert gas-supplied liquid has a temperature higher by 5 to 25 °C than a gelation temperature of the solution of the polysaccharide immediately before the pressure-reducing for forming the foam.

8.   The method according to any one of claims 1 to 7, wherein the supplying the inert gas is performed by bubbling the inert gas into the solution of the polysaccharide and/or shaking the solution of the polysaccharide in a presence of the inert gas.

9.   The method according to any one of claims 1 to 8, wherein the inert gas is COz or NzO.

10.   The method according to any one of claims 1 to 9, wherein the supplying the inert gas is performed by supplying the inert gas at a partial pressure higher than 0 kPa and equal to or lower than 4000 kPa.

11. The method according to any one of claims 1 to 10, further comprising gelling the foam by allowing the foam to stand under a condition of 15 to 25 °C between the pressure-reducing for forming the foam and the drying.

12. The method according to any one of claims 1 to 11, wherein the pressure-reducing for forming the foam is pressure-reducing that causes a pressure difference to be greater than 0 kPa and equal to or less than 4000 kPa before and after the pressure-reducing.

13. The method according to any one of claims 1 to 12, wherein the inert gas-supplied liquid contains no foaming agent other than the inert gas.

14. The method according to any one of claims 1 to 13, wherein the inert gas-supplied liquid further contains a dispersoid.

15. The method according to claim 14, wherein the dispersoid is a tobacco material or a food material.

16. The method according to any one of claims 1 to 15, wherein the inert gas-supplied liquid further contains a solute other than the polysaccharide.

17. The method according to claim 16, wherein the solute is a tobacco flavor component or a food component.

18. A method for producing a water-containing porous body, the method comprising adding water to the porous body obtainable by the method according to any one of claims 1 to 17 to form a water-containing porous body.

19. The method according to claim 18, wherein the water is added in an amount of less than 0.5 parts by mass with respect to 1 part by mass of the porous body.

20. The method according to claim 18, wherein the water is added in an amount of 0.5 to 50 parts by mass with respect to 1 part by mass of the porous body.

21. A porous body obtainable by the method according to any one of claims 1 to 20.

22. A method for producing a tobacco filler for a flavor inhalation article, the method comprising forming a porous body by the method according to any one of claims 1 to 20.

23. A method for producing a filter for a flavor inhalation article, the method comprising forming a porous body by the method according to any one of claims 1 to 20.

24. A method for producing a food product, the method comprising forming a porous body by the method according to any one of claims 1 to 20.

25. A tobacco filler for a flavor inhalation article obtainable by the method according to claim 22, a filter for a flavor inhalation article obtainable by the method according to claim 23, or a food product obtainable by the method according to claim 24.

F I G. 1

110

112    114    113    116    117

111    115

11A    11B

F I G. 2

F I G. 3

F I G. 4

5kV 11.1mm X25 Mix M                    2.00mm

F I G. 5

5kV 11.2mm X25 Mix M        2.00mm

F I G. 6

5kV 12.5mm X25 Mix M        2.00mm

F I G. 7

5kV 11.3mm X25 Mix M                2.00mm

F I G. 8

5kV 11.7mm X25 Mix M                2.00mm

F I G. 9

F I G. 10

F I G. 11

5kV 10.5mm X25 Mix M 2.00mm

F I G. 12

5kV 11.9mm X25 Mix M 2.00mm

F I G. 13

F I G. 14

F I G. 15

F I G. 16

F I G. 17

F I G. 18

F I G. 19

Temperature of agar solution
after pressure release [°C]

F I G. 20

## INTERNATIONAL SEARCH REPORT

| International application No. |
| --- |
| PCT/JP2021/005503 |

**A.   CLASSIFICATION OF SUBJECT MATTER**
Int. Cl. C08J9/30(2006.01)i
FI: C08J9/30 CEP

According to International Patent Classification (IPC) or to both national classification and IPC

**B.   FIELDS SEARCHED**

Minimum documentation searched (classification system followed by classification symbols)
Int. Cl. C08J9/30

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| A | JP 2017-516898 A (BASF SE) 22 June 2017, claims, examples, entire text | 1-25 |
| A | WO 2018/189366 A1 (BASF SE) 18 October 2018, claims, examples | 1-25 |
| A | JP 2007-091954 A (TOSHIBA CORP.) 12 April 2007, claims, examples, entire text | 1-25 |
| A | JP 08-505431 A (ALLIEDSIGNAL INC.) 11 June 1996, claims, examples, entire text | 1-25 |
| A | JP 2000-512666 A (BEN GURION UNIVERSITY OF THE NEGEV) 26 September 2000, claims, examples, entire text | 1-25 |

☒  Further documents are listed in the continuation of Box C.       ☒  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06.04.2021 | 20.04.2021 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| | International application No. |
|---|---|
| | PCT/JP2021/005503 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 51-142552 A (HERCULES INC.) 08 December 1976, claims, examples, entire text | 1-25 |
| A | WO 2010/079793 A1 (JAPAN TOBACCO INC.) 15 July 2010, claims, examples, entire text | 1-25 |

Form PCT/ISA/210 (continuation of second sheet) (January 2015)

INTERNATIONAL SEARCH REPORT

Information on patent family members

International application No.

PCT/JP2021/005503

| Patent Documents referred to in the Report | Publication Date | Patent Family | Publication Date |
|---|---|---|---|
| JP 2017-516898 A | 22.06.2017 | US 2017/0081494 A1<br>claims, examples<br>US 2018/0258249 A1<br>WO 2015/177081 A1<br>EP 3145987 A1<br>CA 2949307 A<br>KR 10-2017-0008823 A<br>CN 106536606 A | |
| WO 2018/189366 A1 | 18.10.2018 | JP 2020-513049 A<br>US 2020/0071484 A1<br>EP 3609952 A1<br>CN 110475813 A<br>KR 10-2019-0134647 A | |
| JP 2007-091954 A | 12.04.2007 | (Family: none) | |
| JP 08-505431 A | 11.06.1996 | JP 6-511197 A<br>US 5502082 A<br>claims, examples<br>JP 2620039 B2<br>US 5494940 A<br>US 5541234 A<br>US 5525710 A<br>WO 1995/012632 A2<br>WO 1993/012877 A1<br>EP 625070 A1 | |
| JP 2000-512666 A | 26.09.2000 | US 6334968 B1<br>claims, examples<br>US 6425918 B1<br>US 2003/0078672 A1<br>WO 1997/044070 A1<br>EP 901384 A1 | |
| JP 51-142552 A | 08.12.1976 | US 4012333 A<br>claims, examples<br>GB 1490322 A<br>CA 1068264 A | |
| WO 2010/079793 A1 | 15.07.2010 | US 2011/0240046 A1<br>claims, examples<br>EP 2366296 A1<br>KR 10-2011-0089177 A<br>CN 102271542 A<br>TW 201032739 A | |

Form PCT/ISA/210 (patent family annex) (January 2015)

38

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011117752 A
- JP 2007091954 A
- WO 2006073065 A
- WO 2010110226 A
- WO 2015046385 A